(19) Europäisches Patentamt
European Patent Office
Office européen des brevets

(11) Veröffentlichungsnummer: **0 014 679**
**A1**

# (12) EUROPÄISCHE PATENTANMELDUNG

(21) Anmeldenummer: 80810027.5

(22) Anmeldetag: 28.01.80

(51) Int. Cl.³: C 09 B 35/46
D 06 P 1/06, D 06 P 3/32

(30) Priorität: 02.02.79 CH 1044/79

(43) Veröffentlichungstag der Anmeldung:
20.08.80 Patentblatt 80/17

(84) Benannte Vertragsstaaten:
BE CH DE FR GB IT

(71) Anmelder: CIBA-GEIGY AG
Patentabteilung Postfach
CH-4002 Basel(CH)

(72) Erfinder: Bitterlin, Otto, Dr.
Nonnenweg 9
CH-4055 Basel(CH)

(72) Erfinder: Schlesinger, Ulrich, Dr.
Mittlerstrasse 47
D-7858 Weil am Rhein(DE)

## (54) Wasserlösliche Trisazofarbstoffe eine Diphenyläther- oder Diphenyldisulfimid-Komponente enthaltend, Verfahren zu deren Herstellung sowie deren Verwendung zum Färben und Bedrucken von Cellulose, Polyamiden und Leder.

(57) Verbindungen der Formel

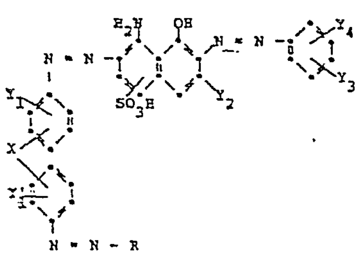

(1)

worin X ein Sauerstoffatom oder ein Brückenglied der Formel $-SO_2-NH-SO_2-$, $Y_1$ und $Y'_1$ unabhängig voneinander je Wasserstoff, Chlor, die Sulfogruppe oder eine niedrigmolekulare Alkoxy- oder Alkylgruppe, $Y_2$ Wasserstoff oder die $SO_3H$-Gruppe, $Y_3$ und $Y_4$ unabhängig voneinander je Wasserstoff, Chlor, Brom, Nitro, Sulfo, niedrigmolekulares Alkyl, niedrigmolekulares Alkoxy oder Acylamino ist und R einen Phenyl- oder Naphthylrest bedeutet, der 2-Hydroxy- oder Aminogruppen oder eine Hydroxy- und eine Aminogruppe oder eine Aminogruppe und eine mit Phenyl- oder Methylphenyl oder Acyl substituierte Aminogruppe trägt und ausserdem mit Sulfo, Chlor, Brom oder niedrigmolekularem Alkyl oder Alkoxy substituiert sein kann.

Croydon Printing Company Ltd.

0014679



BEZEICHNUNG GEÄNDERT
siehe Titelseite

1-12216 /+

## Neue Trisazoverbindungen, deren Herstellung und Verwendung

Die Erfindung betrifft Verbindungen der Formel

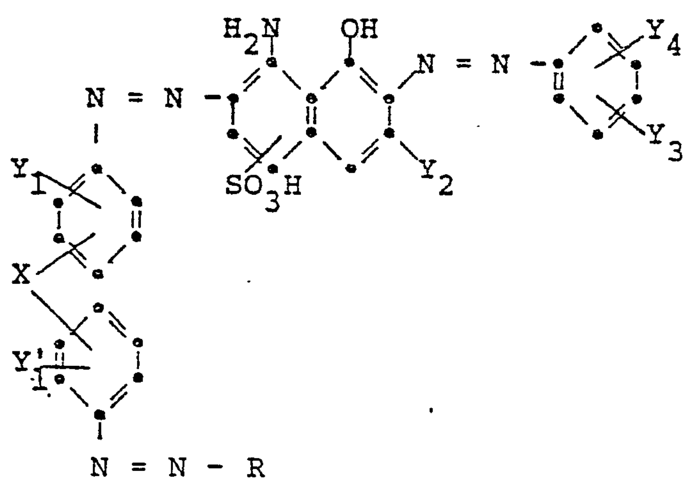

(1)

worin X ein Sauerstoffatom oder ein Brückenglied der Formel $-SO_2-NH-SO_2-$, $Y_1$ und $Y_1'$ unabhängig voneinander je Wasserstoff, Chlor, die Sulfogruppe oder eine niedrigmolekulare Alkoxy- oder Alkylgruppe, $Y_2$ Wasserstoff oder die $SO_3H$-Gruppe, $Y_3$ und $Y_4$ unabhängig voneinander je Wasserstoff, Chlor, Brom, Nitro, Sulfo, niedrigmolekulares Alkyl, niedrigmolekulares Alkoxy oder Acylamino ist und R einen Phenyl- oder Naphthylrest bedeutet, der 2 Hydroxy-

oder Aminogruppen oder eine Hydroxy- und eine Aminogruppe oder eine Aminogruppe und eine mit Phenyl- oder Methylphenyl oder Acyl substituierte Aminogruppe trägt und ausserdem mit Sulfo, Chlor, Brom oder niedrigmolekularem Alkyl oder Alkoxy substituiert sein kann.

Mit "niedrigmolekular" werden vor allem Reste mit 1-4 Kohlenstoffatomen bezeichnet. Mit "Acyl" sind vor allem Alkanoyl, Alkoxycarbonyl und Aroyl gemeint. Beispiele solcher Reste sind Acetyl, Propionyl, Methoxycarbonyl, Aethoxycarbonyl oder Benzoyl.

Eine bevorzugte Gruppe der neuen Verbindungen sind diejenigen der Formel

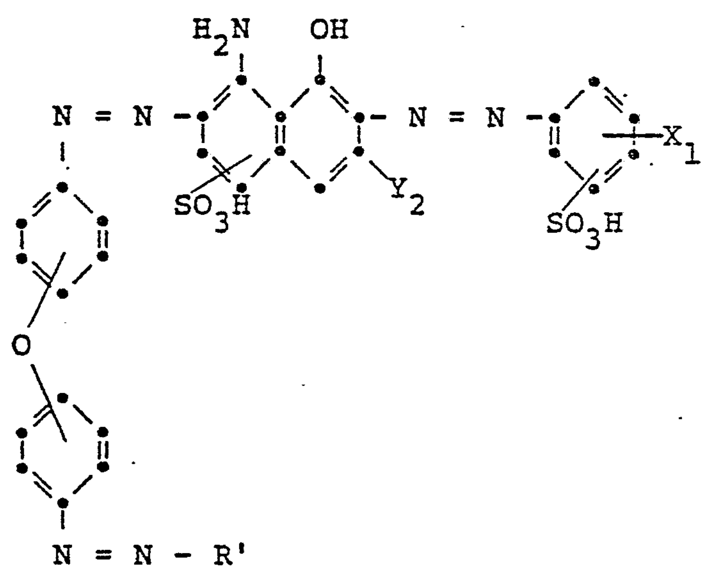

(2)

worin $X_1$ Wasserstoff, Nitro, Chlor, Brom, niedrigmolekulares Alkyl oder Alkoxy oder eine Acylaminogruppe ist und R' den Rest eines gegebenenfalls mit Sulfo, Chlor oder niedrigmolekularem Alkyl oder Alkoxy substituierten Phenylendiamins oder den Resorcinrest bedeutet.

Von besonderem Interesse sind wegen ihrer guten Zugänglichkeit Verbindungen der Formel

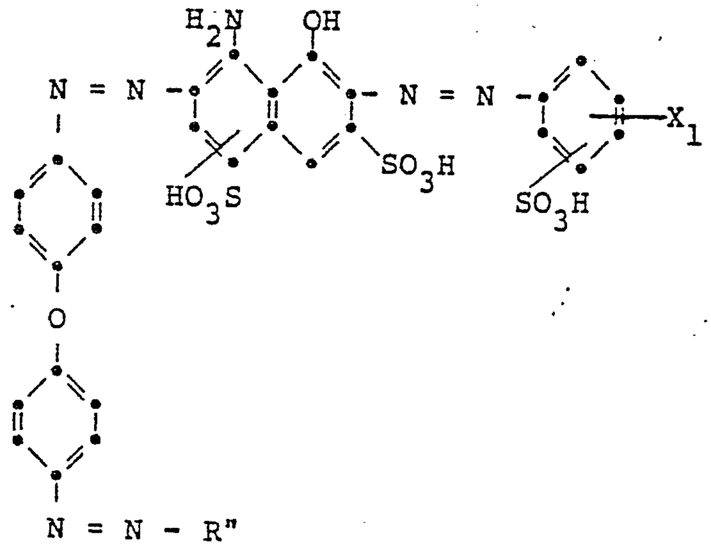

(3)

worin R" den Rest des m-Phenylendiamins bedeutet und $X_1$ die bei Formel (2), angegebene Bedeutung hat, insbesondere aber die Methoxygruppe bedeutet.

Speziell erwähnenswert sind schliesslich die Verbindungen der Formel

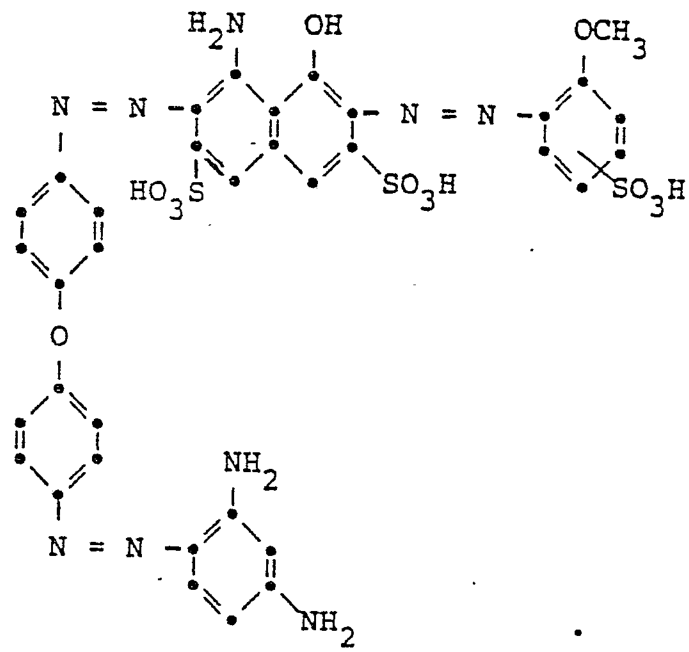

(4)

Die neuen Verbindungen werden hergestellt, indem man eine Verbindung der Formel

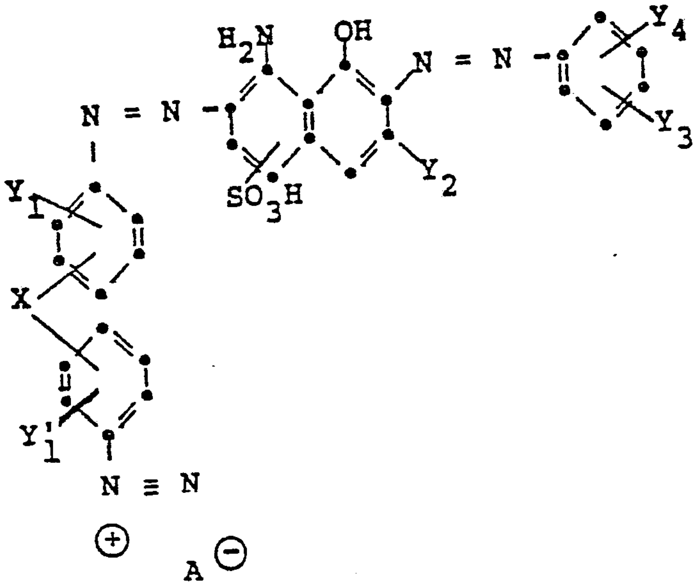

(5)

worin $A^{\ominus}$ ein Anion bedeutet, in alkalischen Milieu auf eine Kupplungskomponente der Formel H - R (6) kuppelt, wobei $Y_1$, $Y_1'$, $Y_2$, $Y_3$, $Y_4$ und R dasselbe wie bei Formel (1) bedeuten.

Die Verbindungen der Formel 5 werden hergestellt, indem man eine Verbindung der Formel

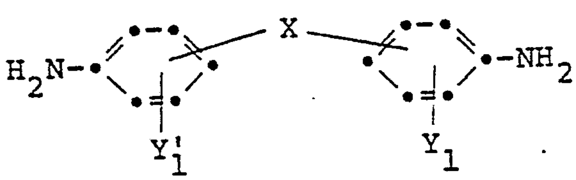

(9)

worin X, $Y_1$ und $Y_1'$ dasselbe wie bei Formel (1) bedeuten, tetrazotiert und in saurer Lösung auf eine 1-Amino-8-naphthol-mono- oder -disulfosäure kuppelt. Die erhaltene Monoazoverbindung wird sodann mit einem diazotierten Amin der Formel

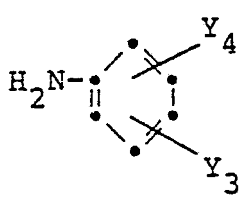

(10)

worin $X_3$ und $X_4$ dasselbe wie bei Formel (1) bedeuten, alkalisch gekuppelt.

Als Verbindungen der Formel 9 verwendet man Disulfimide, wie z.B. 4,4'- und 3,3'-Diamino-diphenyldisulfimid und vorzugsweise Diaminodiphenyläther, insbesondere die 4,4'-Diaminodiphenyläther. Beispiele solcher Verbindungen sind: 4,4'-Diaminodiphenyläther, 3,4'-Diamino-diphenyläther, 4,4'-Diamino-3-chlor-diphenyläther und 4,4'-3-sulfodiphenyläther.

Als Beispiele von Aminonaphtolsulfonsäuren sind vor allem die 1-Amino-8-naphtol-3,6-disulfonsäure und die 1-Amino-8-napthol-4,6-disulfosäure zu nennen, sowie ferner die 1-Amino-8-naphthol-4-sulfosäure.

Als diazotierbare aromatische Amine der Formel 10 sind die folgenden zu nennen: 4-Methylanilin, 4-Methylanilin-2-sulfosäure, 4-Aethylanilin, 4-t-Butylanilin, 4-Methoxyanilin, 4-Methoxyanilin-3- oder 2-sulfosäure, 2-Methoxyanilin-4- oder 5-sulfosäure, 5-Acetyl-aminoanilin-2-sulfosäure, 5-Acetylamino-4-chloranilin-2-sulfosäure, 4-Chloranilin-3-sulfosäure, 4-Benzoylamino-anilin-2-sulfosäure, Anilin-2- oder 3- oder 4-sulfosäure sowie 2-, 3- oder 4-Nitroanilin. Bevorzugt sind diejenigen diazotierbaren aromatischen Amine, die eine Sulfogruppe enthalten.

Geeignete Verbindungen der Formel 6 sind zum Beipiel Resorcin, 2-Amino-5-naphthol-7-sulfosäure, 4-Methoxy-1,3-phenylendiamin oder 4-Chlor-1,3-phenylendiamin. Bevorzugte Verbindungen sind hierbei die 1,3-Phenylendiamine, insbesondere das 1,3-Phenylendiamin selbst.

Die Verbindung der Formel 5 wird im allgemeinen nicht isoliert, sondern es wird zweckmässig direkt das bei der Herstellung des Disazo-Zwischenproduktes anfallende Reaktionsgemisch verwendet. Die Natur des Anions ist daher von untergeordneter Bedeutung. Geeignete Anionen sind z.B. die Halogenidionen, wie Chlorid oder Bromid. Ausserdem kann es sich auch um ein komplexes Anion wie das $BF_4^{\ominus}$ oder $ZnCl_4^{\ominus\ominus}$ handeln oder um ein Sulfat-, Methylsulfat- oder Phosphat-anion oder ein Anion einer organischen Säure wie z.B. das Formiatanion.

Es können anstelle von einheitlichen Ausgangsverbindungen auch Gemische verwendet werden, z.B. verschiedene Amine der Formel (10) oder verschiedene 1-Amino-8-naphtolsulfonsäuren. Man erhält dann Farbstoffgemische mit ähnlichen Eigenschaften wie die einzelnen Farbstoffe.

Die neuen Farbstoffe eignen sich zum Färben und Bedrucken von Materialien aus Cellulose und natürlichem oder synthetischem Polyamid. Besonders geeignet sind sie zum Färben von Leder. Sie werden nach den üblichen Verfahren appliziert, zum Beispiel aus schwach saurem oder schwach alkalischem Bad. Man erhält tiefe, gut deckende Schwarzfärbungen. Diese zeichnen sich aus durch allgemein gute Echtheiten, z.B. Wasch-, Walk-, Schweiss-, Heisswasser-, Säure-, Alkali-, Reib- und Lichtechtheit. Die Farbstoffe haben ein gutes Zieh- und Aufbauvermögen und sie ergeben egale Färbungen. Sie haben ein ausgezeichnetes Deckungsvermögen, sind farbstark und geben eine gute Durchfärbung des Materials.

In den nachfolgenden Beispielen bedeuten Teile Gewichtsteile, Prozente Gewichtsprozente und die Temperaturen sind in Celsiusgraden angegeben.

Beispiel 1:

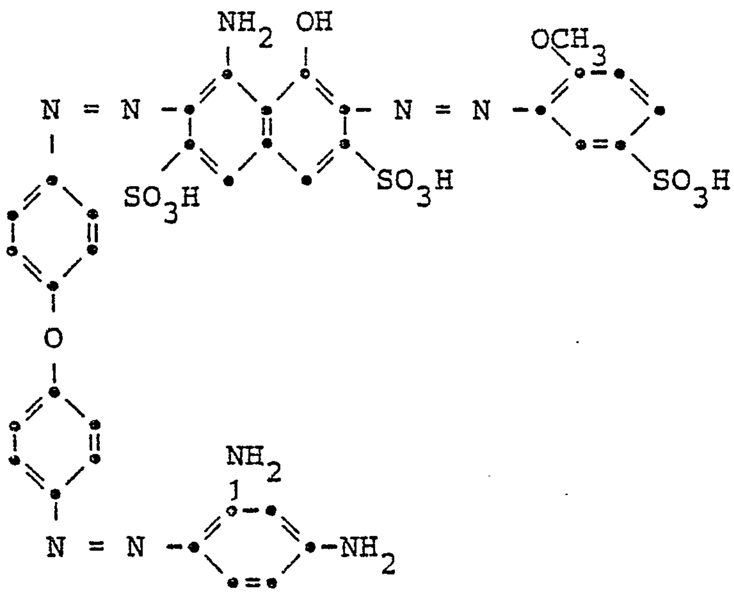

20 Teile 4,4'-Diamino-diphenyläther werden in 150 Volumenteilen Wasser mit 50 Volumenteilen Salzsäure konz. bei 40° gelöst. Man bringt die Lösung durch Eiszugabe und Eisbad auf 0 - 3° und tetrazotiert durch Zulaufenlassen von 50 Volumenteilen 4N Nitritlösung unter Niveau. Die Lösung wird 1 Stunde weiter gerührt; der pH-Wert der Lösung beträgt ca. 1,1.

32,5 Teile H-Säure werden in 50 Volumenteilen Wasser mit 20 %iger Sodalösung neutral gelöst und bei 0 - 3° in 1,5 h zur Tetrazolösung getropft, wobei der pH-Wert auf 1,3 - 1,4 steigt. Die Kupplungssuspension wird 1 Stunde bei 0 - 3° gerührt, dann erhöht man den pH-Wert durch Zutropfen von 10 %iger Sodalösung innerhalb 2 Stunden bei 0 - 3° auf 1,8 - 2,0. Die Suspension des Monoazo-Zwischenproduktes wird über Nacht bei 0 - 3° gerührt, wobei der pH-Wert mit 10 %iger Sodalösung auf 1,8 -2,0 gehalten wird. Sollte

am Morgen keine H-Säure mehr im Reaktionsgemisch vorhanden sein, so tropft man weitere 0,64 Teile H-Säure, in Wasser neutral gelöst, zu. Anschliessend wird der pH-Wert durch Zutropfen von 10 %iger Sodalösung innerhalb 1 Stunde auf einen konstanten Wert von 3,2 - 3,4 gestellt. Das erhaltene Monoazo-Zwischenprodukt ist zum Grossteil ausgefallen.

18,3 Teile 2-Aminoanisol-4-sulfosäure werden in 90 Volumenteilen Wasser mit 20 %iger Sodalösung neutral gelöst, durch Eiszugabe und Eisbad auf 0 - 5° gebracht und mit 22 Volumenteilen Salzsäure konz. versetzt. Durch Zulaufenlassen von 22,5 Volumenteilen 4N Nitritlösung unter Niveau wird diazotiert und die Lösung dann 1 Stunde gerührt. Die Diazolösung lässt man in 10 Min. bei 0 - 3° zur Suspension des Monoazo-Zwischenproduktes laufen; der pH-Wert sinkt dabei auf 1,2 - 1,4. Der pH-Wert wird durch Zutropfen von Natronlauge konz. auf 8,5 gestellt, wobei das gebildete Disazo-Zwischenprodukt in Lösung geht.

11,3 Teile m-Phenylendiamin werden in 75 Volumenteilen Wasser und 0,8 Volumenteilen Salzsäure konz. bei 50° gelöst und mit Eis auf 40° abgekühlt. Der pH-Wert der Lösung beträgt 5,5-6,0. Diese Lösung wird innerhalb 30 Min. bei 0 - 3° zur Lösung des Disazo-Zwischenproduktes getropft, wobei sich ein pH von 5,5-6,0 einstellt. Durch Zutropfen von Natronlauge konz. erhöht man den pH-Wert auf 8,5 und rührt die Lösung des Trisazofarbstoffs weiter, indem man die Temperatur in 1 Stunde auf 10-12° ansteigen lässt. Danach wird die Lösung innerhalb 1 Stunde auf 40° erwärmt und es werden 3 Volumenprozente Kaliumchlorid zugesetzt. Der pH-Wert wird durch Zutropfen von Salzsäure konz. auf 2,0 gestellt. Das ausgefallene Endprodukt wird noch 30 Min. bei 40° gerührt, abfiltriert und mit 3 %iger, sauer gestellter Kaliumchloridlösung von 40° gewaschen. Das getrocknete Produkt stellt ein in alkalischem Medium lösliches, schwarzes Pulver dar, das Leder in schwarzen Tönen von guten Echtheiten färbt.

Beispiel 2:

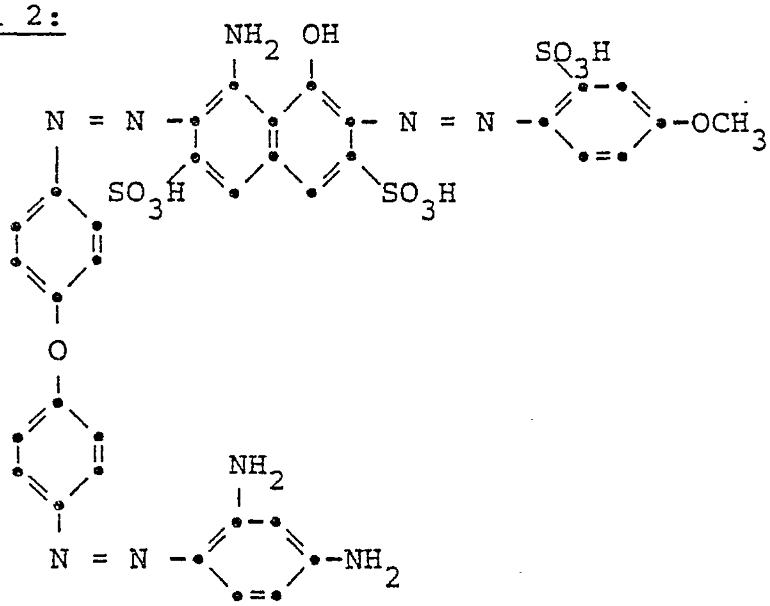

20 Teile 4,4'-Diamino-diphenyläther werden in 150 Volumenteilen Wasser mit 50 Volumenteilen Salzsäure konz. bei 40° gelöst. Nachdem durch Eiszugabe und Eisbad die Temperatur auf 0 - 3° gesenkt wurde, wird die Lösung durch Zulaufenlassen von 50 Volumenteilen Nitritlösung 4N unter Niveau tetrazotiert und noch 1 Stunde gerührt. Der pH-Wert beträgt 1,1.

32,5 Teile H-Säure werden in 50 Volumenteilen Wasser mit 20 %iger Sodalösung neutral gelöst und bei 0 - 3° zur Tetrazolösung getropft; der pH-Wert steigt dabei auf 1,3 - 1,4. Die Kupplungssuspension wird 1 Stunde bei 0 - 3° gerührt; dann wird der pH-Wert durch Zutropfen von 10 %iger Sodalösung innerhalb 2 Stunden bei 0 - 3° auf 1,8 - 2,0 gestellt. Die Suspension des Monoazo-Zwischenproduktes wird über Nacht bei 0 - 3° gerührt, wobei der pH-Wert mit 10 %iger Sodalösung auf 1,8 - 2,0 gehalten wird. Ist am Morgen keine H-Säure mehr im Reaktionsgemisch vorhanden, so tropft

man weitere 0,64 Teile H-Säure, in Wasser neutral gelöst, zu. Anschliessend stellt man den pH-Wert durch Zutropfen von 10 %iger Sodalösung innerhalb von 1 Stunde auf einen konstanten Wert von 3,2 - 3,4. Das Monoazo-Zwischenprodukt ist grösstenteils ausgefallen.

18,3 Teile 4-Amino-anisol-3-sulfosäure werden in 90 Volumenteilen Wasser mit 20 %iger Sodalösung neutral gelöst. Durch Eiszugabe und Eisbad wird die Lösung auf 0 - 5° gebracht und dann mit 22 Volumenteilen Salzsäure konz. versetzt, wobei wieder eine Suspension entsteht. Bei der Diazotierung derselben durch Zulaufenlassen von 22,5 Volumenteilen 4N Nitritlösung unter Niveau bildet sich vorübergehend eine Lösung, dann wieder eine Suspension. Man rührt das Diazotierungsgemisch eine Stunde; dann lässt man die Suspension in 10 Min. bei 0 - 3° zur Suspension des Monoazozwischenproduktes laufen, wobei der pH-Wert auf 1,2 - 1,4 fällt. Durch Zutropfen von Natronlauge konz. wird der pH-Wert auf 8,5 gestellt, wobei sich das gebildete Disazo-Zwischenprodukt löst.

11,3 Teile m-Phenylendiamin werden in 75 Volumenteilen Wasser und 0,8 Volumenteilen Salzsäure konz. bei 50° gelöst und mit Eis auf 40° gekühlt. Der pH-Wert der Lösung beträgt 5,5 - 6,0. Diese Lösung tropft man in 30 Min. bei 0 - 3° zum gelösten Disazo-Zwischenprodukt, wobei sich ein pH-Wert von 5,5 - 6,0 einstellt. Der pH-Wert wird durch Zutropfen von Natronlauge konz. auf 8,5 erhöht und die Lösung des Trisazofabstoffs wird noch 1 Stunde gerührt, wobei man die Temperatur auf 10 - 12° ansteigen lässt. Nach Erwärmen der Lösung innerhalb 1 Stunde auf 40° werden 3 Volumenprozente Kaliumchlorid zugesetzt, der pH-Wert wird durch Zutropfen von Salzsäure konz. auf 2,0 gestellt. Der

ausgefallene Trisazofarbstoff wird 30 Min. bei 40° ausgerührt, filtriert und mit 3 %iger, sauer gestellter Kaliumchloridlösung von 40° gewaschen. Das getrocknete Produkt stellt ein lösliches, schwarzes Pulver dar, das Leder in schwarzen Tönen färbt.

Farbstoffe mit ähnlichen Echtheitseigenschaften, die Leder ebenfalls schwarz färben, erhält man, wenn man die in Kolonne I der folgenden Tabelle angegebenen Diaminoverbindungen tetrazotiert und auf 1-Amino-8-naphthol-3,6-disulfosäure sauer kuppelt und die erhaltene Monoazoverbindung mit einem der in Kolonne II angegebenen diazotierten Amine alkalisch umsetzt und das erhaltene Disazo-Zwischenprodukt auf die in Kolonne III angegebenen Verbindungen kuppelt.

T a b e l l e

| Beispiel Nr. | I | II | III |
|---|---|---|---|
| 3 | 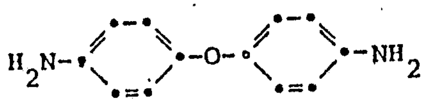 | 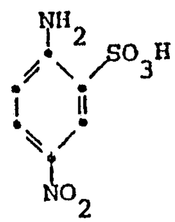 | 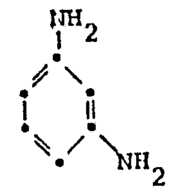 |
| 4 | " | " | 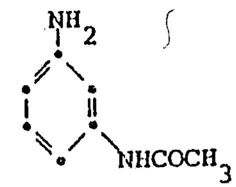 |
| 5 | " | 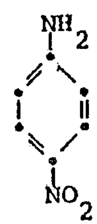 | 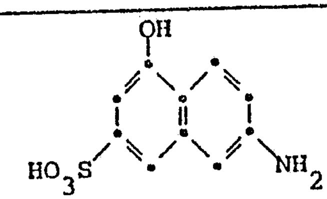 |
| 6 | 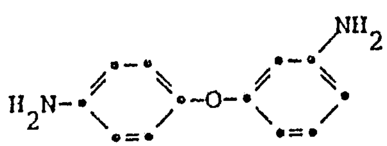 | 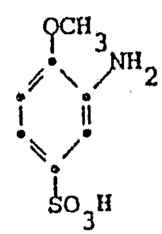 | 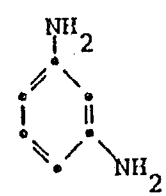 |

Fortsetzung Tabelle

| Beispiel Nr. | I | II | III |
|---|---|---|---|
| 7 | 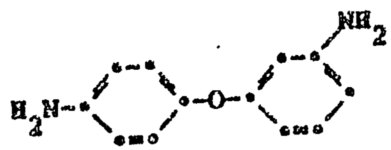 | 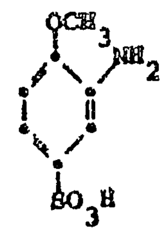 | 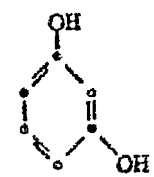 |
| 8 | " | " | 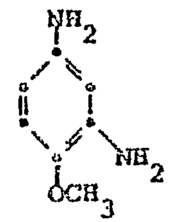 |
| 9 | 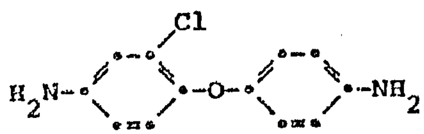 | " | " |

Fortsetzung Tabelle

| Beispiel Nr. | I | II | III |
|---|---|---|---|
| 10 | 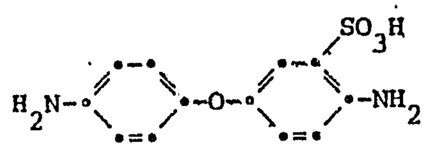 | 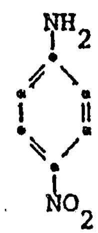 | 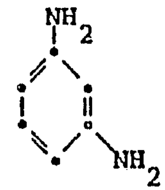 |
| 11 | 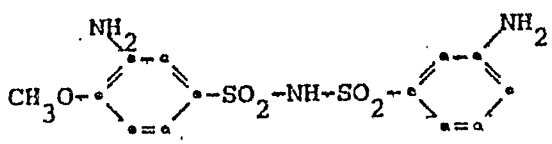 | " | 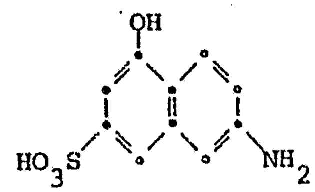 |
| 12 | 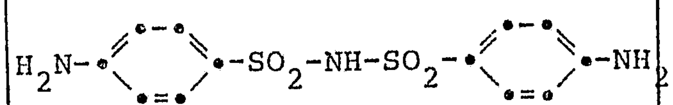 | 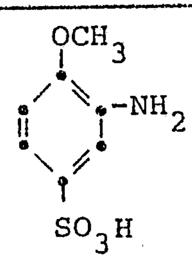 | 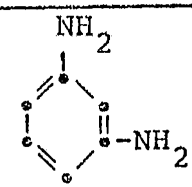 |

Färbevorschrift

In einem Färbefass werden 100 Teile auf übliche Weise neutralisiertes Chromnarbenleder in einer Flotte von 300 Teilen Wasser und 1 Teil des Farbstoffes gemäss Beispiel 1 während 30 Minuten bei 50° gewalkt. Zur Fettung werden 30 Teile eines anionischen, synthetischen Lederfettungsmittel dem Bade zugegeben und das Leder wird darin weitere 30 Minuten behandelt. Anschliessend werden 0,5 Teile 85 %iger Ameisensäure zugegeben, das Leder wird weitere 20 Minuten behandelt und schliesslich mit Wasser gespült. Man erhält ein in schwarzer Nuance gefärbtes Leder mit guten Echtheiteigenschaften.

Patentansprüche

1. Verbindungen der Formel

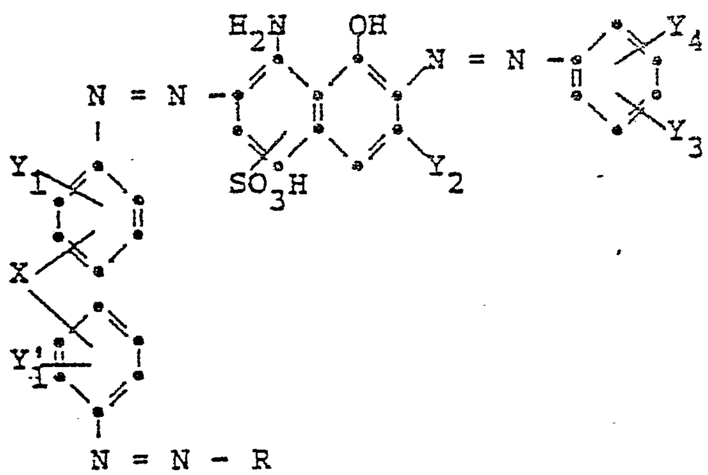

(1)

worin X ein Sauerstoffatom oder ein Brückenglied der Formel $-SO_2-NH-SO_2-$, $Y_1$ und $Y_1'$ unabhängig voneinander je Wasserstoff, Chlor, die Sulfogruppe oder eine niedergmolekulare Alkoxy- oder Alkylgruppe, $Y_2$ Wasserstoff oder die $SO_3H$-Gruppe, $Y_3$ und $Y_4$ unabhängig voneinander je Wasserstoff, Chlor, Brom, Nitro, Sulfo, niedrigmolekulares Alkyl, niedrigmolekulares Alkoxy oder Acylamino ist und R einen Phenyl- oder Naphthylrest bedeutet, der 2 Hydroxy- oder Aminogruppen oder eine Hydroxy- und eine Aminogruppe oder eine Aminogruppe und eine mit Phenyl- oder Methylphenyl oder Acyl substituierte Aminogruppe trägt und ausserdem mit Sulfo, Chlor, Brom oder niedrigmolekularem Alkyl oder Alkoxy substituiert sein kann.

2. Verbindungen gemäss Anspruch 1 der Formel

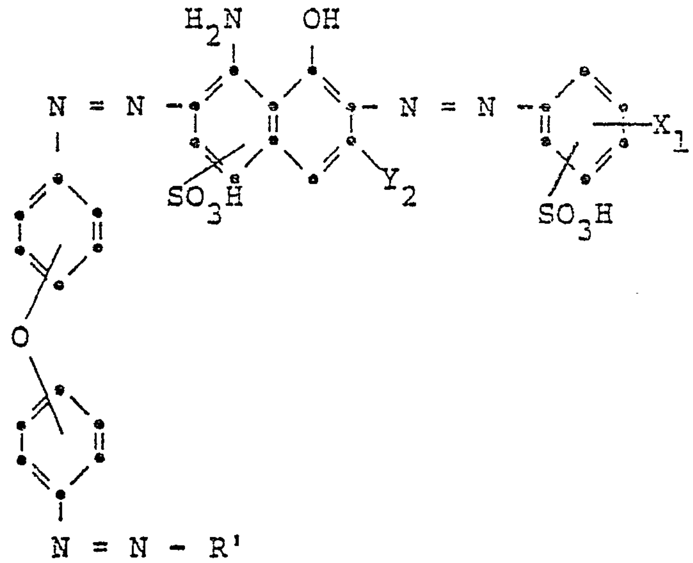

(2)

worin $X_1$ Wasserstoff, Nitro, Chlor, Brom, niedrigmolekulares Alkyl oder Alkoxy oder eine Acylaminogruppe ist und R' den Rest eines gegebenenfalls mit Sulfo, Chlor oder niedrigmolekularem Alkyl oder Alkoxy substituierten Phenylendiamins oder den Resorcinrest bedeutet.

3. Verbindungen gemäss den Ansprüchen 1 und 2 der Formel

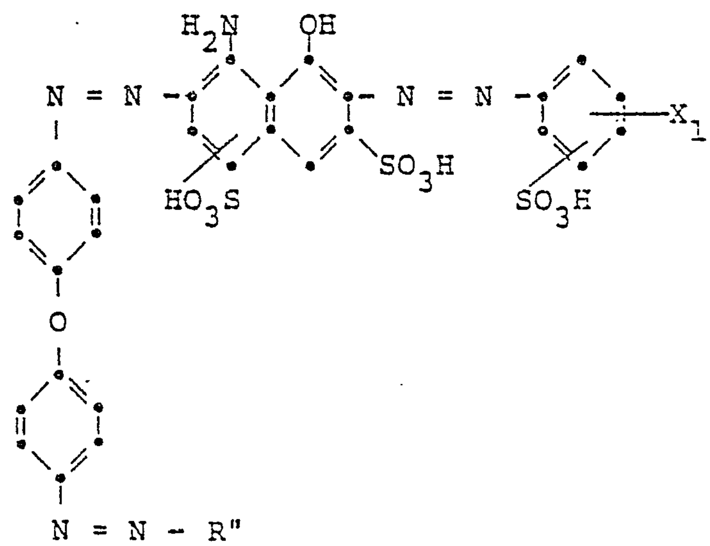

(3)

worin R" den Rest des m-Phenylendiamins bedeutet und $X_1$ die bei Formel (2), Anspruch 2 angegebene Bedeutung hat.

4. Verbindungen gemäss den Ansprüchen 2 und 3, worin $X_1$ die Methoxygruppe bedeutet.

5. Verbindungen gemäss den Ansprüchen 1 bis 4 der Formel

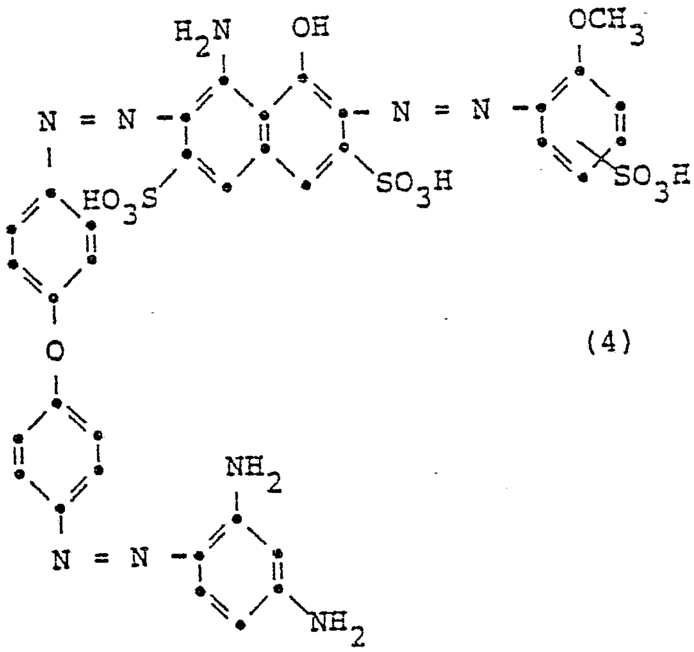

(4)

6. Die Verbindung gemäss den Ansprüchen 1 bis 5 der Formel

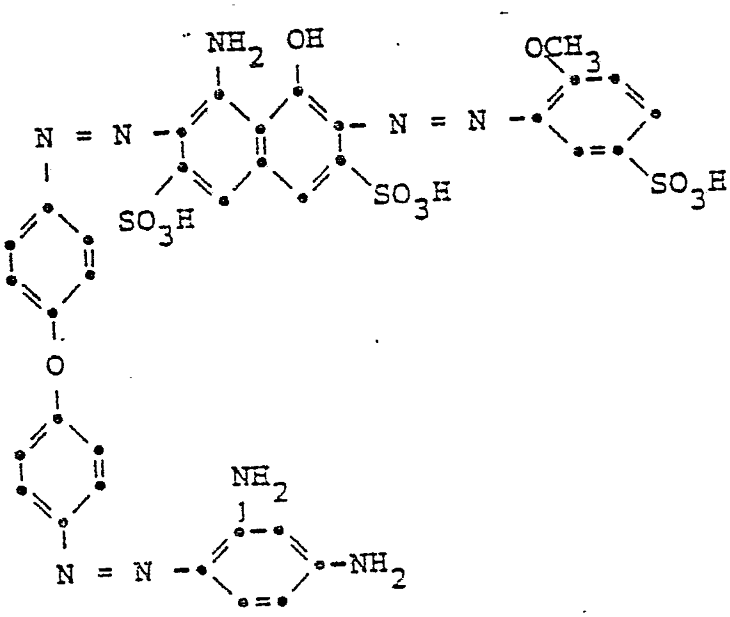

7. Verfahren zur Herstellung von Verbindungen der Formel

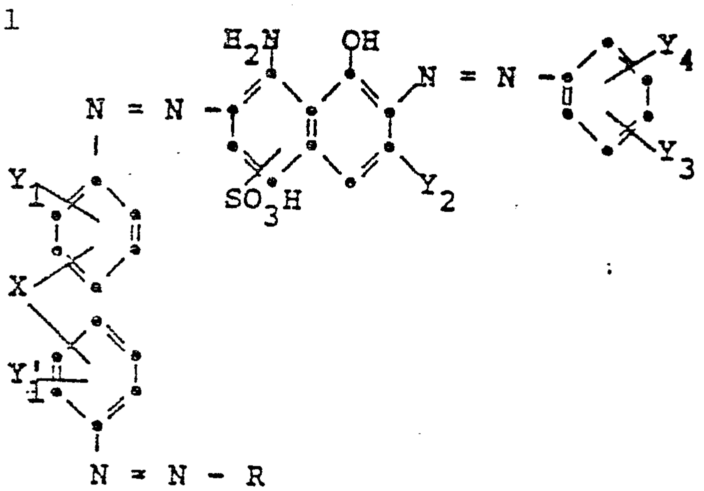

(1)

worin X ein Sauerstoffatom oder ein Brückenglied der Formel $-SO_2-NH-SO_2-$, $Y_1$ und $Y'_1$ unabhängig voneinander je Wasserstoff, Chlor, die Sulfogruppe oder eine niederigmolekulare Alkoxy- oder Alkylgruppe, $Y_2$ Wasserstoff oder die $SO_3H$-Gruppe, $Y_3$ und $Y_4$ unabhängig voneinander je Wasserstoff, Chlor, Brom, Nitro, Sulfo, niedrigmolekulares Alkyl, niedrigmolekulares Alkoxy oder Acylamino ist und R einen Phenyl- oder Naphthylrest bedeutet, der 2-Hydroxy- oder Aminogruppen oder eine Hydroxy- und eine Aminogruppe oder eine Aminogruppe und eine mit Phenyl- oder Methylphenyl oder Acyl substituierte Aminogruppe trägt und ausserdem mit Sulfo, Chlor, Brom oder niedrigmolekularem Alkyl oder Alkoxy substituiert sein kann, dadurch gekennzeichnet, dass man eine Verbindung der Formel

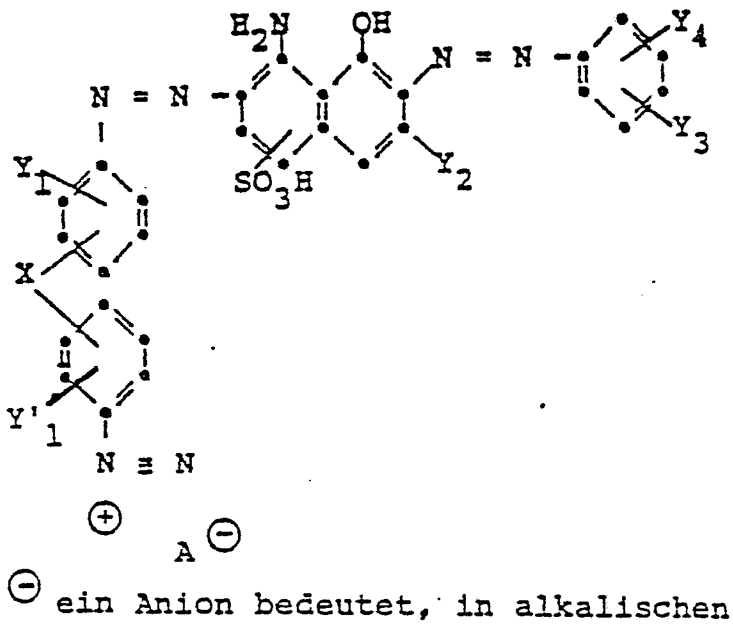

(5)

worin $A^{\ominus}$ ein Anion bedeutet, in alkalischen Milien auf eine Kupplungskomponente der Formel H - R (6) kuppelt.

8. Verfahren zum Färben und Bedrucken von Cellulose- oder natürlichen oder synthetischen Polyamidmaterialien unter Verwendung der gemäss den Ansprüchen 1 bis 6 definierten Farbstoffe.

9. Verfahren gemäss Anspruch 8 zum Färben und Bedrucken von Leder.

10. Das gemäss den Ansprüchen 8 und 13 erhaltene, gefärbte oder bedruckte Material.

Europäisches Patentamt

# EUROPÄISCHER RECHERCHENBERICHT

Nummer der Anmeldung
EP 80 81 0027

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int Cl. 3) |
|---|---|---|---|
| A | DE - C - 927 041 (HOECHST)<br>* Ansprüche; Seite 7, Farbstoff Nr. 38,39 *<br>-- | 1 | C 09 B 35/46<br>D 06 P 1/06<br>3/32 |
| A | DE - C - 933 582 (HOECHST)<br>* Ansprüche *<br>-- | 1 | |
| A | FR - A - 2 141 958 (BASF)<br>* Ansprüche *<br>---- | 1 | |

RECHERCHIERTE SACHGEBIETE (Int. Cl. 3)

C 09 B 35/46
D 06 P 3/32

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-04-1980 | MALHERBE |